# EUROPÄISCHE PATENTSCHRIFT

(11) **EP 4 253 926 B1**
(45) Veröffentlichungstag und Bekanntmachung des Hinweises auf die Patenterteilung: **16.10.2024**
(21) Anmeldenummer: 23181699.2
(22) Anmeldetag: 26.06.2019
(51) Int. Cl.: B60P 7/08, G01L 5/10

(54) **VORRICHTUNG ZUR SENSIERUNG EINER GURTSPANNKRAFT**
DEVICE FOR SENSING A BELT TENSION
DISPOSITIF POUR LA DÉTECTION D'UNE FORCE DE TENSION DE SANGLE

(30) Priorität: 28.06.2018 DE 102018115599
(43) Veröffentlichungstag der Anmeldung: 04.10.2023
(62) Teilanmeldung aus: 19736971.3
(73) Patentinhaber: BPW Bergische Achsen Kommanditgesellschaft, 51674 Wiehl (DE)
(72) Erfinder: KOBLER, Jan-Philipp, 51766 Engelskirchen (DE); ESSERT, Adrian, 51588 Nümbrecht (DE); LAMERS, Christopher, 51063 Köln (DE)
(74) Vertreter: DREISS Patentanwälte PartG mbB

(56) Entgegenhaltungen:
- WO-A1-2017/130246
- JP-A- 2003 222 561
- US-B1- 7 112 023

## Beschreibung

Die Erfindung betrifft eine Vorrichtung zur Sensierung der Gurtspannkraft eines Gurtbandes, insbesondere eines Spanngurtes zur Ladungssicherung auf Fahrzeugen, umfassend ein Gehäuse mit sich gegenüberliegendem Unterteil und Oberteil, wobei das Gehäuse ein Gelenk zur Verschwenkung des Oberteils gegenüber dem Unterteil und einen Schließmechanismus zum Verschließen des Gehäuses aufweist.

Um die Sicherheit von Gütertransporten zu erhöhen, ist die Prüfung der Gurtspannkraft von Gurtbändern, insbesondere von Spanngurten von hoher Wichtigkeit. Beispielsweise im Schiffs-, LKW-, oder Eisenbahnverkehr werden Güter auf den Ladeflächen mittels Spanngurten verspannt. Die Gurte sichern durch ihre in Gurtlängsrichtung wirkenden Spannkräfte die Ladung, und verhindern ein ungewolltes Verrutschen oder Kippen der Ladung auf der Ladefläche, um Sicherheitsrisiken zu mindern. Dabei dürfen in Abhängigkeit von der Ladung gewisse Spannkräfte in den Spanngurten nicht unterschritten werden. Gleichzeitig ist es aus Sicherheitsgründen auch zu vermeiden, dass die Spanngurte zu fest angezogen und damit mit Spannkräften in Gurtlängsrichtung belastet werden, die oberhalb der zulässigen Spannungen liegen, sowie dass das Ladegut zu hohen Druckkräften ausgesetzt werden.

Wesentliche Aufgabe der Spanngurte ist bei der Ladungssicherung die Erzeugung einer hohen Haftreibung zwischen dem zu sichernden Gut und der Ladefläche, was durch die Erhöhung der senkrecht auf die Ladefläche wirkenden Normalkraft infolge der Verspannung der Spanngurte bewirkt wird. Hierbei ist allerdings nach dem Ausführen eines Spannvorgangs die Spannkraft im Gurt nicht statisch, sondern kann sich durch Setzungen innerhalb der Spann gurte nach dem Spannen sowie aufgrund von geringfügigen Bewegungen des zu sichernden Gutes während des Transports wieder verändern. Es ist daher wünschenswert, dass nach erfolgter Ladungssicherung auf einfache Weise die Gurtspannkraft der Gurtbänder überprüft und überwacht werden kann, um sicherzustellen, dass die zulässigen Spannungen bzw. Spannkräfte nicht unter- bzw. überschritten werden.

Aus der gattungsgemäßen WO 2017 / 130 246 A1 ist Zugspannungsmessgerät bekannt, umfassend ein Paar drehbarer erster Tragrollen, einen Pressabschnitt, der an einer Position angeordnet ist, die der Mitte des Paars erster Tragrollen gegenüberliegt, und eine Kraftmessdose, die eine auf den Pressabschnitt erzeugte Last messen kann. Diese Last resultiert aus der Zugspannkraft eines zu messenden Elements.

Die US 7 112 023 B1 offenbart ebenfalls eine Vorrichtung zur Sensierung der Gurtspannkraft eines Gurtbandes.

Die Aufgabe der vorliegenden Erfindung besteht darin, eine Vorrichtung zur Sensierung der Gurtspannkraft eines Gurtbandes dahingehend weiterzuentwickeln, dass die Montage der Vorrichtung an dem Gurtband vereinfacht wird, und eine verlässliche Überwachung der Gurtspannkraft realisiert wird.

Erfindungsgemäß wird diese Aufgabe durch die Vorrichtung gemäß Anspruch 1 gelöst. Zweckmäßige Weiterbildungen sind den abhängigen Ansprüchen zu entnehmen.

Bevorzugt sind die beiden Auflagebereiche einstückig an dem Unterteil des Gehäuses ausgebildet. Das Verlagerungselement ist demgegenüber zumindest mittelbar mit dem Oberteil verbunden. Im Folgenden wird dieser Fall näher beschrieben. Es ist auch denkbar, die Auflagebereiche einstückig an dem Oberteil des Gehäuses auszubilden, wobei das Verlagerungselement in diesem Fall zumindest mittelbar mit dem Unterteil verbunden ist. Das Unterteil des Gehäuses ist in der Draufsicht auf das gespannte Gurtband zur Ladungssicherung vorzugsweise unterhalb des Gurtbands angeordnet. Das Oberteil ist entsprechend oberhalb des Gurtbands angeordnet, wobei das Gurtband zwischen dem Unter- und Oberteil eingeklemmt und zwischen diesen Gehäuseteilen hindurchgeführt ist.

Bevor das flach ausgebildete Gurtband zur Sicherung einer Ladung gespannt wird, wird das Gurtband zunächst zwischen Unter- und Oberteil eingelegt, wobei das Gurtband mit dessen erster flachen Seite auf den Auflagebereichen zur Anlage kommt. Dabei ragt das Gurtband im Bereich der Gurteintrittsseite und der Gurtaustrittsseite über das Unterteil hinaus. Durch das Zuklappen des Oberteils wird das Gurtband im Gehäuse verspannt, sobald das Verlagerungselement federbelastet an der zweiten flachen Seite des Gurtbands zur Anlage kommt.

Das Gehäuse weist vorzugsweise eine Länge von weniger als 10 cm und eine Breite von weniger als 9 cm auf. Die längere Seite des Gehäuses erstreckt sich dabei bevorzugt im Wesentlichen in Gurtlängsrichtung. Das Gehäuse weist eine Höhe von weniger als 4,5 cm, bevorzugt weniger als 3 cm auf. Darüber hinaus sind die Verbindungsmittel zur Verbindung des Ober- und Unterteils ausschließlich am oder innerhalb des Gehäuses angeordnet. Anders gesagt erstrecken sich die Verbindungsmittel ausschließlich zwischen Ebenen durch die Außenseiten des Ober- und Unterteils. Es stehen dadurch keine Bauteile der Vorrichtung vom Gehäuse ab. Das Gehäuse ist somit insbesondere kompakt ausgebildet.

Die kompakte Bauweise ermöglicht eine an dem Gurtband dauerhaft verweilbare Vorrichtung. Beispielsweise können auch mehrere nicht in Benutzung befindliche Gurtbänder mit einer jeweiligen montierten Vorrichtung gemeinsam in einem Aufbewahrungsbehälter gelagert werden, wobei durch die platzsparende und kompakte Bauweise der Vorrichtung ein Entwirren der Gurtbänder nicht erschwert wird.

Das Verlagerungselement ist bevorzugt als Druckstempel ausgebildet und weist in der Draufsicht insbesondere eine rechteckige Grundform auf, wobei sich die kürzere Seite des Verlagerungselements im Wesentlichen parallel zur Längsrichtung der Unter- bzw. der Oberseite erstreckt. Die längere Seite des Verlagerungselements erstreckt sich im Wesentlichen quer zur Längsrichtung der Unter- bzw. der Oberseite, insbesondere mindestens über die gesamte Breite des Gurtbands.

Das Verlagerungselement kann flächig ausgebildet sein, wobei die Anlagefläche somit parallel zur Längsrichtung des Gurtbands verläuft. Es ist auch denkbar, das Verlagerungselement gewölbt auszubilden. In diesem Fall ist das Verlagerungselement an seiner am Gurtband zur Anlage kommenden Anlagefläche korrespondierend zum Verlauf des ausgelenkten Gurtbands konvex oder parabelförmig ausgebildet.

Ferner ist das Verlagerungselement bevorzugt näher zur Gurteintrittsseite als zur Gurtaustrittsseite angeordnet. Alternativ kann das Verlagerungselement näher zur Gurtaustrittsseite als zur Gurteintrittsseite angeordnet sein. Anders gesagt ist das Verlagerungselement in Gurtlängsrichtung bevorzugt nicht mittig im Ober- bzw. Unterteil angeordnet. Das Verlagerungselement ist derart mit dem zumindest einen Sensorelement verbunden, dass das Verlagerungselement quer zur flachen Seite des Gurtbands bzw. zum Oberteil des Gehäuses stufenlos zwischen einer minimalen und einer maximalen Verlagerungsposition verlagerbar ist. In einem bevorzugten Ausführungsbeispiel ist das Verlagerungselement im Wesentlichen senkrecht zum Gurtband verlagerbar.

Das federbelastete Verlagerungselement liegt im demontierten Zustand der Vorrichtung in der maximalen Verlagerungsposition vor. Auch nach einem Einlegen des Gurtbandes auf die Auflagebereiche des Unterteils sowie im montierten Zustand des Gehäuses liegt das Verlagerungselement in der maximalen Verlagerungsposition vor, sodass das Gurtband innerhalb des Gehäuses durch das Verlagerungselement glockenförmig oder parabelförmig ausgelenkt wird. Zwischen den Auflagebereichen des Unterteils ist eine Ausnehmung ausgebildet, die zur teilweisen Aufnahme des Verlagerungselements, in dessen maximaler Verlagerungsposition vorgesehen ist. Damit wird gewährleistet, dass das Gurtband zu keiner Zeit an weiteren Stellen, außer an den Auflagebereichen des Unterteils zur Anlage kommt, aufliegt bzw. daran angepresst wird.

Erst wenn das Gurtband beispielsweise durch eine Ratsche gespannt und mit einer Zugkraft belastet wird, erfolgt ein Druck auf das federbelastete Verlagerungselement in Richtung des Oberteils des Gehäuses bzw. in Richtung der minimalen Verlagerungsposition. Dabei detektiert das zumindest eine Sensorelement die entsprechende Auslenkung des Verlagerungselements bzw. die Verformung des zumindest einen Sensorelements. Die minimale Verlagerungsposition des Verlagerungselements liegt dann vor, wenn das Gurtband eine derart hohe Zugkraft aufweist, dass das Gurtband zwischen der Gurteintrittsseite und der Gurtaustrittsseite keine oder nahezu keine Auslenkung quer zur Längsrichtung des Gurts erfährt. Dazu kann am Gehäuse ein Anschlag ausgebildet sein, an dem das Verlagerungselement in der minimalen Verlagerungsposition zur Anlage kommt.

Vorzugsweise sind die beiden zueinander beabstandeten Auflagebereiche einstückig an dem Ober- oder an dem Unterteil ausgebildet. Dies hat den Vorteil, dass das Ober- bzw. Unterteil mit den Auflagebereichen aus wenigen Einzelteilen einfach und preiswert herstellbar ist und zugleich besonders stabil und langlebig ausgebildet ist. Die Auflagebereiche erstrecken sich quer zur Gurtlängsrichtung und weisen bevorzugt eine Breite auf, die mindestens der Breite des Gurtes entspricht, damit der Gurt auf ganzer Breite anliegt und eine fehlerfreie Messung der Gurtspannkraft sichergestellt ist. Bevorzugt ist das zumindest eine Sensorelement ein Kraftsensor, ein Wegsensor, ein Druckaufnehmer, ein Beschleunigungssensor und/oder ein Dehnungssensor. Wenn das zumindest eine Sensorelement als Kraftsensor ausgebildet ist, so ist beispielsweise die Verwendung einer Wägezelle denkbar. Eine Wägezelle besteht in der Regel aus einem metallischen Bau teil, zum Beispiel einem Federkörper, dessen Geometrie sich unter Einwirkung einer äußeren Belastung verändert. Diese elastische Verformung wird erfasst und in ein elektrisches Signal umgewandelt. Zur Erfassung und Umformung in ein elektrisches Signal kann der Kraftsensor beispielsweise mit Dehnungssensoren in Form von Dehnungsmessstreifen ergänzt werden. Ein als Druckaufnehmer ausgebildetes Sensorelement ist zur Messung der aus der Zugspannung des Gurtbandes resultierenden Kraft, die auf das Verlagerungselement einwirkt, ausgebildet. Wenn das zumindest eine Sensorelement als Wegsensor ausgebildet ist, kann beispielsweise der Weg der Auslenkung des federbelasteten Verlagerungselements sensiert werden.

Wenn das zumindest eine Sensorelement als Beschleunigungssensor ausgebildet ist, können Stoßereignisse erfasst werden. Ferner ist mit dem Beschleunigungssensor möglich, eine Winkelstellung des Gehäuses sowie einen daraus resultierenden Zugwinkel des Gurtbandes zu erfassen.

Ferner bevorzugt ist das zumindest eine Sensorelement aus einem Metall, einem Kohlen- stoff-Silikon-Verbundwerkstoff und/oder einem piezosensitiven Material ausgebildet.

Die Erfindung schließt die technische Lehre ein, dass zwei oder mehr Sensorelemente mit dem Verlagerungselement wirkverbunden sind, um die Gurtspannkraft des Gurtbandes zu detektieren. Durch die Lagerung des Verlagerungselements auf zwei Sensorelementen wird ein Verkippen bzw. Verkanten des Verlagerungselements verhindert. Ferner ist von Vorteil, dass bei zwei Sensorelementen, die bevorzugt am Verlagerungselement beabstandet zueinander angeordnet sind, eine Vollbrücke zur Messung der Gurtspannkraft eingesetzt werden kann, wodurch auftretende Temperatureinflüsse, die das Messergebnis verfälschen könnten, eliminiert werden.

Bevorzugt weist das Gehäuse ein Gelenk zur Verschwenkung des Oberteils gegenüber dem Unterteil und einen Schließmechanismus zum Verschließen des Gehäuses auf. Mit anderen Worten ist das Gehäuse scharnierförmig ausgebildet, wobei das Unterteil gegenüber dem Oberteil oder umgekehrt verschwenkt werden kann. Mithin verbindet das Gelenk das Ober und Unterteil gelenkig miteinander. Der Schließmechanismus ist dazu vorgesehen, das Gehäuse zu verschließen, sodass das Gurtband im Gehäuse aufgenommen und fixiert ist. Die mittels des Schließmechanismus erzeugte Verbindung zwischen dem Ober- und Unterteil ist beliebig lösbar, um das Gurtband, beispielsweise in Folge von Verschleiß, aus dem Gehäuse herauszunehmen.

Vorzugsweise sind zur Ausbildung des Gelenks am Ober- und Unterteil Ösen zur gemeinsamen Aufnahme eines ersten Bolzens angeordnet. Mit anderen Worten weist sowohl das Oberteil als auch das Unterteil des Gehäuses zur Ausbildung des Gelenks jeweils mindestens eine, vorzugsweise zwei oder mehrere Ösen auf. Der erste Bolzen ist dabei bevorzugt parallel zur Längsrichtung des Gehäuses bzw. zur Längsrichtung des Gurtbandes angeordnet, und durch die Ösen des Ober- und Unterteils hindurchgeführt. Die Ösen können beispielsweise ringförmig oder teilweise ringförmig ausgebildet sein und weisen einen kreisförmigen Innendurchmesser auf, der mindestens dem Außendurchmesser des ersten Bolzens entspricht, um eine freie Verschwenkung des Ober- bzw. Unterteils zu ermöglichen. Der erste Bolzen ist vorzugsweise als Gewindebolzen zur Erzeugung einer Schraubverbindung ausgebildet. Dadurch ist der erste Bolzen jederzeit lösbar, um das Oberteil vom Unterteil zu trennen. Zur sicheren, gelenkigen Verbindung des Oberteils mit dem Unterteil, sind die Ösen des Ober- bzw. Unterteils in Längsrichtung des Gurtbandes abwechselnd am Gehäuse angeordnet.

Bevorzugt sind zur Ausbildung des Schließmechanismus am Ober- und Unterteil weitere Ösen zur gemeinsamen Aufnahme eines zweiten Bolzens angeordnet. Mit anderen Worten ist das Oberteil lösbar am Unterteil fixierbar, um die Vorrichtung jederzeit vom Gurtband lösen zu können. Sowohl das Oberteil als auch das Unterteil des Gehäuses weisen zur Ausbildung des Schließmechanismus jeweils mindestens eine, vorzugsweise zwei oder mehrere Ösen auf. Der zweite Bolzen ist dabei bevorzugt parallel zur Längsrichtung des Gehäuses bzw. zur Längsrichtung des Gurtbandes angeordnet, und durch die Ösen des Ober- und Unterteils hindurchgeführt. Die Ösen können beispielsweise ringförmig oder teilweise ringförmig ausgebildet sein und weisen einen kreisförmigen Innendurchmesser auf, der mindestens dem Außendurchmesser des zweiten Bolzens entspricht, um eine freie Verschwenkung des Ober- bzw. Unterteils zu ermöglichen. Der zweite Bolzen ist vorzugsweise ebenfalls als Gewinde bolzen zur Erzeugung einer Schraubverbindung ausgebildet. Dadurch ist der zweite Bolzen jederzeit lösbar, um das Oberteil am Schließmechanismus vom Unterteil zu trennen, um das Gehäuse zu öffnen. Dies kann beispielsweise notwendig sein, wenn das Gurtband verschlissen ist und ausgewechselt werden muss. Die Anzahl und Anordnung der Ösen am Schließmechanismus und am Gelenk kann analog ausgebildet sein. Es ist aber auch eine voneinander abweichende Anordnung und Anzahl der Ösen denkbar. Vorteilhafterweise sind das Gelenk und der Schließmechanismus an gegenüberliegenden Gehäuseseiten des Gehäuses angeordnet. Dies ermöglicht das Öffnen und Schließen des Gehäuses gemäß einem gewöhnlichen Scharnier. Die Vorrichtung kann demnach als zusammenhängendes Bauteil ausgebildet sein, wobei das Oberteil über das Gelenk mit dem Unterteil verbunden ist.

Gemäß einem bevorzugten Ausführungsbeispiel ist ein Batteriemodul dazu vorgesehen, eine Auswerte- und Sendeeinheit mit elektrischer Energie zu versorgen. Die Auswerte- und Sendeeinheit empfängt die von dem zumindest einen Sensorelement detektierten Messsignale, wertet diese aus und wandelt die Messsignale in Datensignale um. Das Messsignal und das Datensignal enthalten Informationen über die im Gurtband vorliegende Gurtspannkraft. Die Auswerte- und Sendeeinheit ist ferner dazu ausgebildet, das Messsignal und/oder das um gewandelte Datensignal kabellos an eine Empfängereinheit, zum Beispiel an einen Computer oder Smartphone, zu senden, wo die entsprechenden Informationen zumindest visuell wiedergegeben werden können. Auch eine akustische Wiedergabe der Informationen ist an der Empfängereinheit denkbar. Die Auswerte- und Sendeeinheit kann ferner ein Empfängermodul umfassen, um gezielt von einem Nutzer angesteuert zu werden. So kann beispielsweise der Nutzer ein Signal an die Auswerte- und Sendeeinheit mit dem Empfängermodul senden und eine Abfrage der Gurtspannkraft initiieren. Dadurch kann die Gurtspannkraft permanent oder zu jedem beliebigen Zeitpunkt abgefragt werden.

Erfindungsgemäß ist das Batteriemodul dazu vorgesehen, eine Anzeigeeinheit mit elektrischer Energie zu versorgen. Das durch die Auswerte- und Sendeeinheit ausgewertete Messsignal und/oder das Datensignal werden dabei auf der am Gehäuse angeordneten Anzeigeeinheit ausgegeben oder dargestellt. Die Anzeigeeinheit kann beispielsweise als Display oder als LED-Anzeige zur Wiedergabe der entsprechenden Informationen über die im Gurtband vorliegende Gurtspannkraft ausgebildet sein. Die Gurtspannkraft des Gurtbandes kann dabei als Zugspannung oder als Zugkraft ausgegeben werden.

Erfindungsgemäß umfasst die Anzeigeeinheit zumindest ein LED-Leuchtmittel. Sind mehrere LED- Leuchtmittel vorgesehen, so sind sie beispielsweise in einer LED-Reihe der LED-Anzeige angeordnet. Dabei sind eine Vielzahl von LED-Leuchtmitteln vorgesehen, die in lastabhängige und/oder ladungsabhängige Bereiche unterteilt sind. Die Bereiche sind insbesondere optisch und/oder räumlich. Gemäß einer bevorzugten Ausführungsform sind die LED-Leuchtmittel in zwei Bereiche unterteilt. Der erste Bereich ist beispielsweise für feste Ladungen und der zweite Bereich für komprimierende Ladungen vorgesehen. Mithin sind die Bereiche in diesem Fall ladungsabhängig unterteilt. Zur energiesparenden Nutzung der Anzeigeeinheit ist denkbar, eine automatische Zeitabschaltung der Anzeigeeinheit vorzusehen, wobei die Anzeigeeinheit nur bei auftretenden Spannungsänderungen oder bei einer manuellen Nutzerabfrage eingeschaltet bzw. betrieben wird.

Das Batteriemodul besteht vorzugsweise aus einer oder mehrerer elektrischer Batterien oder Akkus, wobei das Batteriemodul auswechselbar am entsprechenden Ober- oder Unterteil angeordnet ist.

Bevorzugt sind das Batteriemodul, die Anzeigeeinheit sowie die Auswerte- und Sendeeinheit gemeinsam in dem Ober- oder Unterteil angeordnet. Sofern die Auflagebereiche am Unterteil des Gehäuses ausgebildet sind und das Oberteil das Verlagerungselement aufweist, ist es von Vorteil, das Batteriemodul, die Anzeigeeinheit sowie die Auswerte- und Sendeeinheit ebenfalls im Oberteil vorzusehen. Mit anderen Worten ist dann die gesamte Elektronik der Vorrichtung im Oberteil zusammengeführt.

Vorzugsweise ist das Batteriemodul in einem Batteriefach des Gehäuses angeordnet, wobei das Batteriefach eine Öffnung zur Aufnahme des Batteriemoduls aufweist, wobei die Öffnung des Batteriefachs zum Gurtband hin ausgerichtet ist. Dadurch ist ein Entnehmen des Batteriemoduls ausschließlich im demontierten Zustand der Vorrichtung möglich. Sobald das Gurt band in das Gehäuse eingelegt und die Vorrichtung am Gurtband fixiert wird, ist ein Entnehmen des Batteriemoduls nicht mehr möglich.

Vorzugsweise ist das Batteriefach mittels einer Abdeckung verschließbar. Das Batteriefach nimmt das Batteriemodul vorzugsweise vollständig auf, wobei die Abdeckung das Batteriemodul vor äußeren Einflüssen, wie Flüssigkeit und Verschmutzung schützt.

Gemäß einer bevorzugten Ausführungsform ist am Ober- oder Unterteil ein erstes Fixierelement angeordnet, um das Gehäuse in Längsrichtung am Gurtband zu befestigen. Das erste Fixierelement ist dazu vorgesehen, das Gehäuse zumindest reibschlüssig oder kraftschlüssig mit dem Gurtband zu verbinden. Dazu kann das erste Fixierelement an einer am Gurtband zur Anlage kommenden Auflagefläche eine rutschhemmende Oberflächenstruktur aufweisen, um ein Durchrutschen des Gurtbandes durch das Gehäuse bzw. ein Abrutschen des Gehäuses vom Gurtband zu vermeiden. Das Gehäuse behält also seine Längsposition am Gurtband bei, selbst bei Erschütterungen. Vorzugsweise ist das erste Fixierelement an einem der beiden Auflagebereiche angeordnet, wobei das erste Fixierelement gemeinsam mit einem zweiten, an dem gegenüberliegenden Unter- oder Oberteil angeordneten Fixierelement das Gurtband in Längsrichtung klemmt. Mit anderen Worten wird das Gurtband zwischen dem ersten und zweiten Fixierelement eingeklemmt.

Bevorzugt ist das zweite Fixierelement an dem ersten oder an dem zweiten Auflagebereich angeformt bzw. einteilig mit diesem verbunden. Das Gurtband kann punktuell oder über eine definierte Länge des Gurtbandes zwischen dem ersten und dem zweiten Fixierelement ein geklemmt sein. Vorteilhaft ist dabei, dass die Vorrichtung zwar in Längsrichtung am Gurtband fixiert ist, aber nicht in direkter Kraftkette des Gurtbands angeordnet ist. Daher ist die Vorrichtung kein sicherheitsrelevantes Bauteil zur Sicherung von Gütern, sondern ein Kontrol lm ittel.

Jedoch ist das Gurtband an dem anderen Auflagebereich nicht zwischen dem Ober- und Unterteil geklemmt. Somit ist das Gurtband ausschließlich im Bereich eines der beiden Auflagebereiche im Gehäuse eingeklemmt bzw. befestigt.

Zum Beispiel weist das Gehäuse am ersten Auflagebereich einen kleineren Spalt zwischen dem Ober- und Unterteil auf, als am zweiten Auflagebereich. Der erste Spalt am ersten Auflagebereich ist derart ausgebildet, dass das Gurtband zwischen dem ersten Fixierelement und dem zweiten Fixierungselement eingeklemmt ist, wohingegen der zweite Spalt am zweiten Auflagebereich derart ausgebildet ist, dass das Gurtband zwischen dem Ober- und Unter teil nicht eingeklemmt bzw. ungeklemmt ist. Anders gesagt ist das Gurtband am zweiten Auflagebereich zwischen dem Ober- und Unterteil beweglich. Alternativ kann das Gehäuse auch am zweiten Auflagebereich am Gurtband geklemmt sein, wohingegen das Gurtband am ersten Auflagebereich nicht geklemmt, sondern frei beweglich ist.

Bevorzugt ist das erste Fixierelement an der Abdeckung des Batteriefachs angeformt. Die Abdeckung weist an einer dem Gurtband zugewandten Seite das erste Fixierelement mit der rutschhemmenden Oberflächenstruktur und an einer dem Batteriemodul zugewandten Seite vorzugsweise eine Struktur zur Lagefixierung des Batteriemoduls auf. An der Abdeckung des Batteriefachs ist ferner eine Dichtung zur Abdichtung des Batteriefachs angeordnet, wobei durch die Montage des Gehäuses am Gurtband eine resultierende, auf das erste Fixierelement einwirkende Kraft die Komprimierung und somit die Dichtwirkung der Dichtung erhöht und ebenso das Batteriemodul in dessen Lage sichert. Die Auflagebereiche sind bezogen auf die Längsrichtung des Gurtbandes bzw. des Gehäuses bevorzugt unterschiedlich lang ausgebildet. Anders gesagt ist der erste Auflagebereich, an dem das erste Fixierelement angeordnet ist, in Längsrichtung des Gurtbandes länger ausgebildet als der zweite Auflagebereich. Das Gurtband bildet im Bereich des ersten Auflagebereichs somit einen breiteren Fixierbereich für das Gurtband aus, wobei das Gurtband am zweiten Auflagebereich lediglich aufliegt und geführt ist. Im Bereich des zweiten Auflagebereichs ist das Gurtband somit nicht fixiert. Mit anderen Worten ist das Gurtband am zweiten Auflagebereich zwischen dem Ober- und Unterteil in Gurtlängsrichtung frei beweglich.

Gemäß einer zweiten Ausführungsform sind das Gelenk an der Gurteintrittsseite des Gehäuses und der Schließmechanismus an der Gurtaustrittsseite des Gehäuses angeordnet. Es ist denkbar das Ober- und Unterteil des Gehäuses form- und/oder kraftschlüssig zu verbinden, wobei auf Bolzen zur Bildung der Verbindung verzichtet werden kann. Beispielsweise kann das Unterteil zumindest einen Hinterschnitt aufweisen, in den ein jeweiliges Rastelement des Oberteils verrastend eingeführt wird. Diese Verbindung kann zur Demontage des Gehäuses jederzeit gelöst werden. Alternativ können das Ober- und Unterteil mittels einer oder mehrerer Schraubverbindungen senkrecht zur Längsrichtung miteinander verbunden werden. In diesem Fall können am Oberteil eine oder mehrere Ausnehmungen angeordnet sein, durch die eine jeweilige Schraube hindurchgeführt werden und in mit den Schrauben korrespondierende und als Innengewinde ausgebildete Ausnehmungen am Unterteil aufgenommen werden, um das Ober- und Unterteil durch eine oder mehrere Schraubverbindungen miteinander zu verbinden. Für eine gleichmäßige Kraftverteilung und ein ungehindertes Hindurchführen des Gurtbandes durch das Gehäuse ist es von Vorteil, in jedem Eckbereich des Oberteils bzw. des Unterteils eine jeweilige Schraubverbindung vorzusehen.

Gemäß einer dritten Ausführungsform sind das Unter- und Oberteil des Gehäuses durch das Gelenk einteilig miteinander verbunden. Mit anderen Worten ist das Gehäuse somit nach einem Grillzangenprinzip ausgebildet, wobei das Gelenk als elastisches Bindeglied zwischen dem Unter- und Oberteil ausgebildet ist. Das Gehäuse ist somit aus einem einzigen Teil gefertigt. Auch eine stoffschlüssige Verbindung des Oberteils mit dem Unterteil ist denkbar. Zum Verschließen des Gehäuses wird das Gelenk elastisch verformt, sodass das Oberteil gegen das Unterteil gedrückt wird und gemäß der obigen Ausführung mit dem Unterteil verschraubt werden kann.

Gemäß einem vierten Ausführungsbeispiel sind zur Ausbildung des Gelenks und des Schließmechanismus an der Abdeckung des Batteriefachs Ösen zur Aufnahme des ersten bzw. zweiten Bolzens angeordnet. Somit ist die Abdeckung räumlich zwischen dem Ober und Unterteil angeordnet und um das Gelenk verschwenkbar.

Weitere die Erfindung verbessernde Maßnahmen werden nachstehend gemeinsam mit der Beschreibung bevorzugter Ausführungsbeispiele der Erfindung anhand der Figuren näher dargestellt. Dabei zeigt
Figur 1 eine vereinfachte schematische Ansicht eines Kraftfahrzeugs zur Veranschaulichung der Anordnung einer erfindungsgemäßen Vorrichtung an einem Gurt band zur Sicherung von Gütern,
Figur 2 eine perspektivische Ansicht einer erfindungsgemäßen Vorrichtung im montierten Zustand und angedeuteter Lage eines Gurtbandes gemäß einer ersten Ausführungsform,
Figur 3 eine perspektivische Ansicht der erfindungsgemäßen Vorrichtung gemäß Figur 2 im demontierten Zustand,
Figur 4 eine perspektivische Explosionsansicht der erfindungsgemäßen Vorrichtung gemäß den Figuren 2 und 3,
Figur 5 eine schematische Schnittansicht zur Veranschaulichung des Aufbaus der er findungsgemäßen Vorrichtung im montierten Zustand gemäß den Figuren 2 bis 4,
Figur 6 eine stark vereinfachte Darstellung der Funktionsweise eines Verlagerungselements der erfindungsgemäßen Vorrichtung,
Figur 7 eine perspektivische Ansicht der erfindungsgemäßen Vorrichtung gemäß einer zweiten Ausführungsform in einem teilmontierten Zustand und angedeuteter Lage des Gurtbandes,
Figur 8 eine schematische Schnittdarstellung der erfindungsgemäßen Vorrichtung gemäß einer dritten Ausführungsform in einem demontierten Zustand, und

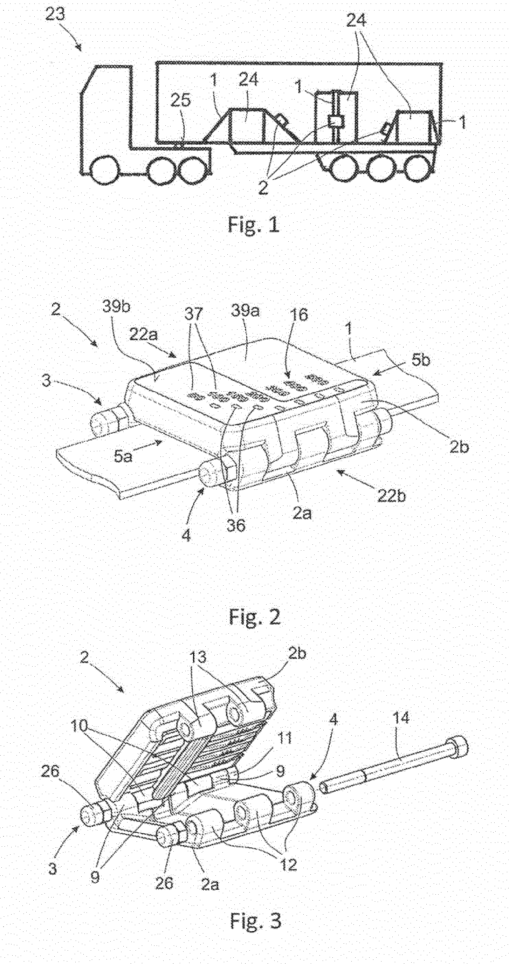

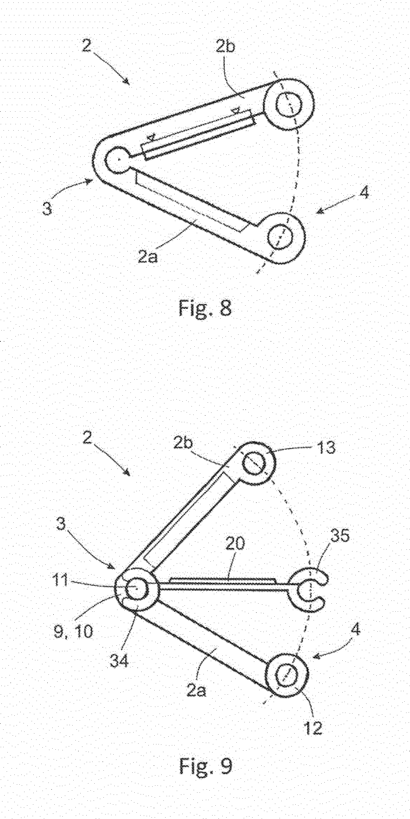

Figur 9 eine schematische Schnittdarstellung der erfindungsgemäßen Vorrichtung gemäß einer vierten Ausführungsform in einem demontierten Zustand, Gemäß Figur 1 weist ein Kraftfahrzeug 23 eine Ladefläche 25 auf, auf der Ladegüter 24 zum Transport positioniert und mittels eines jeweiligen als Spanngurt ausgebildeten, flachen Gurtbandes 1 gesichert sind. Die Gurtbänder 1 sind mittels einer - hier nicht dargestellten - Ratsche festgezurrt und stehen somit unter Zugspannung. Alle Gurtbänder 1 weisen zur Sensierung der Gurtspannkraft eine jeweilige Vorrichtung auf, die durch ein Gehäuse 2 am jeweiligen Gurtband 1 fixiert sind.

Nach Figur 2 umfasst die Vorrichtung das Gehäuse 2 mit sich gegenüberliegendem Unterteil 2a und Oberteil 2b, wobei das Gurtband 1 im vorliegend montierten Zustand des Gehäuses 2 aus einer Gurteintrittsseite 5a und eine Gurtaustrittsseite 5b hinaustritt. Mithin ist das Gurt band durch das Gehäuse 2 hindurchgeführt. Das Ober- und Unterteil 2a, 2b sind über ein Gelenk 3 gegeneinander verschwenkbar verbunden, wobei das Gelenk 3 vorliegend an einer ersten Seite des Gehäuses 2 parallel zur Längsrichtung des Gurtbandes 1 verläuft. Ferner ist an einer zweiten Seite des Gehäuses 2, die sich parallel zur ersten Seite erstreckt, ein Schließmechanismus 4 zum Verschließen des Gehäuses 2 vorgesehen. Anders gesagt sind das Gelenk 3 und der Schließmechanismus 4 an gegenüberliegenden Gehäuseseiten 22a, 22b des Gehäuses 2 angeordnet sind. Vorliegend erstrecken sich die beiden Gehäuseseiten 22a, 22b im Wesentlichen senkrecht zu der Gurteintrittsseite 5a und der Gurtaustrittsseite 5b, die ebenfalls gegenüberliegend zueinander angeordnet sind.

An der Oberseite 2b des Gehäuses 2 ist eine Anzeigeeinheit 16 dargestellt. Die Anzeigeeinheit 16 ist als LED-Anzeige mit mehreren LED-Leuchtmitteln 36 ausgebildet. An jedem LED- Leuchtmittel 36 ist ein Zahlenwert 37 abgebildet, wobei jeder Zahlenwert 37 einem entsprechenden Wert der Gurtspannkraft im Gurtband 1 entspricht. Ferner sind die LED-Leuchtmittel 36 in zwei ladungsabhängige Bereiche 39a, 39b unterteilt. Der erste Bereich 39a ist vorliegend für feste Ladungen und der zweite Bereich 39b für komprimierende Ladungen vorgesehen.

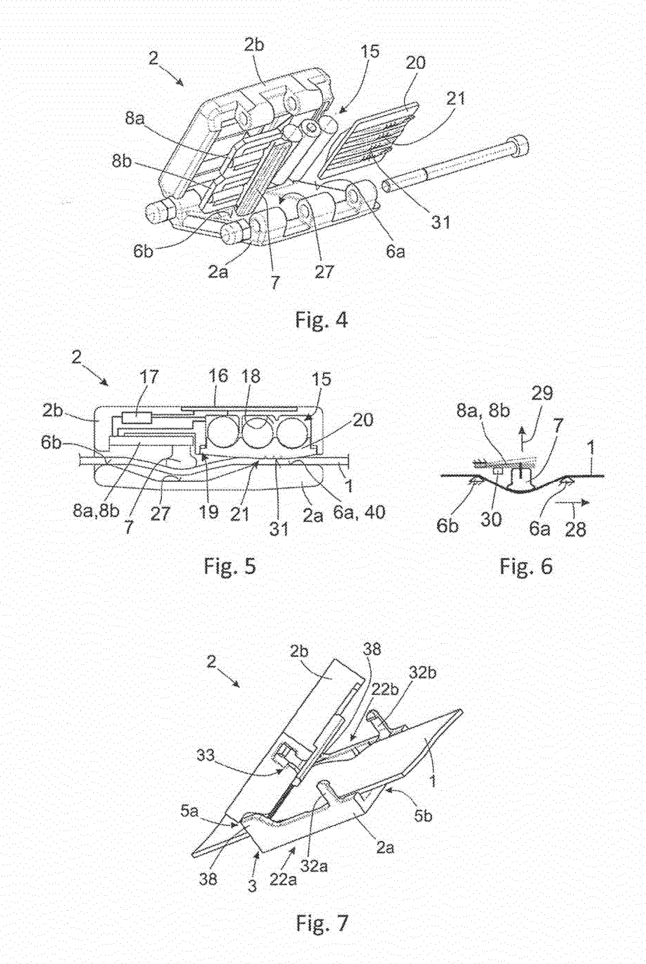

Bei der Messung der Gurtspannkraft leuchtet ein dem Wert der Gurtspannkraft entsprechen des LED-Leuchtmittel 36 auf, sodass die in dem Gurtband 1 vorliegende Gurtspannkraft auf einfache Weise abgelesen werden kann. Die Anzeigeeinheit 16 kann derart ausgebildet sein, dass beispielsweise ein erreichter Kraftwert der Gurtspannkraft durch das entsprechende LED-Leuchtmittel 36 angezeigt wird. Es ist auch denkbar, dass ein überschrittener Kraftwert der Gurtspannkraft durch das entsprechende LED-Leuchtmittel 36 angezeigt wird. Weiteres zur Anzeigeeinheit 16 ist in Figur 5 beschrieben. In Figur 3 ist das Gehäuse 2 im unmontierten Zustand dargestellt, wobei das Oberteil 2b nur über das Gelenk 3 mit dem Unterteil 2a verbunden ist. Zur Ausbildung des Gelenks 3 sind am Unterteil 2a drei Ösen 9 und am Oberteil 2b zwei Ösen 10 vorgesehen, die in Längsrichtung des Gehäuses 2 abwechselnd zueinander angeordnet sind und gemeinsam einen ersten Bolzen 11 aufnehmen, der mit einer Mutter 26 verschraubt ist. Mit anderen Worten sind das Ober- und Unterteil 2a, 2b über den Bolzen 11 gegeneinander verschwenkbar.

Zur Ausbildung des Schließmechanismus 4 sind am Unterteil 2a drei weitere Ösen 12 und am Oberteil 2b zwei weitere Ösen 13 vorgesehen, die in Längsrichtung des Gehäuses 2 ab wechselnd zueinander angeordnet sind und gemeinsam einen zweiten Bolzen 14 aufnehmen, der zum Verschließen des Gehäuses mit einer Mutter 26 verschraubbar ist.

Nach den Figuren 4 und 5 sind an dem Unterteil 2a des Gehäuses 2 zwei zueinander beabstandete Auflagebereiche 6a, 6b zur Auflage des Gurtbandes 1 ausgebildet. Für die einfache und preiswerte Herstellung der Vorrichtung aus wenigen Einzelteilen sind die Auflagebereiche 6a, 6b einstückig mit dem Unterteil 2a ausgebildet. Bezogen auf die Längsrichtung des Gurtbandes ist der erste Auflagebereich 6a länger ausgebildet, als der zweite Auflagebereich 6b. Zwischen den beiden Auflagebereichen 6a, 6b ist eine Ausnehmung 27 ausgebildet, die dazu vorgesehen ist, ein Verlagerungselement 7 und/oder das Gurtband 1 zumindest teilweise aufzunehmen.

Das Verlagerungselement 7 ist vorliegend senkrecht zur Längsrichtung des Gurtbandes 1 beweglich am Oberteil 2b angeordnet, wobei das Verlagerungselement zwischen einer mini malen und einer maximalen Verlagerungsposition stufenlos verlagerbar ist. Im unmontierten Zustand des Gehäuses liegt das Verlagerungselement 7 in der maximalen Verlagerungsposition vor. Mit anderen Worten ragt das Verlagerungselement 7 maximal in die Ausnehmung 27 ein. Auch im montierten Zustand des Gehäuses, das heißt, wenn das Gurtband 1 zwischen dem Ober- und Unterteil 2a, 2b fixiert ist, liegt das Verlagerungselement 7 in der maximalen Verlagerungsposition vor. Während des Spannvorgangs des Gurtbandes 1 wird das Verlagerungselement 7 durch den axial auf das Verlagerungselement 7 wirkenden Druck des Gurtbandes 1 in Richtung zu dem Oberteil 2b bzw. senkrecht zur Längsrichtung des Gurtbandes 1 bewegt.

Das Verlagerungselement 7 ist nach Figur 6 mit zwei Sensorelementen 8a, 8b wirkverbunden, wobei hier schematisch lediglich das erste Sensorelement 8a dargestellt und beschrieben ist. Die Sensorelemente 8a, 8b detektieren die Auslenkung des Verlagerungselements 7 infolge der Gurtspannkraft, die während des Gurtspannvorgangs erzeugt und während des Transports der Ladegüter zumindest stichpunktweise überwacht wird. Der Druck auf das Verlagerungselement 7 und damit dessen Auslenkung ist umso größer, je größer die Zugkraft des Gurtbandes 1 ist. Mit anderen Worten wird das Verlagerungselement 7 infolge einer Zugspannkraft des Gurtbandes in einer Spannrichtung 28 in ein Auslenkrichtung 29 verlagert, wobei sich die Verlagerung des Verlagerungselements 7 in einer Verformung der Sensorelemente 8a, 8b wiederspiegelt. Dazu sind die beiden Sensorelemente 8a, 8b als Kraftsensoren, nämlich als Wägezellen ausgebildet. An den Wägezellen sind ferner jeweilige Dehnungsmessstreifen 30 angeordnet, um die Verformung der Wägezellen zu detektieren. Die Messgröße ist ein Maß für die Gurtspannkraft innerhalb des Gurtbandes 1.

Die beiden Sensorelemente 8a, 8b werden mittels eines in den Figur 4 und 5 gezeigten Batteriemoduls 15 mit elektrischer Energie versorgt, wobei das Batteriemodul 15 vorliegend aus drei einzelnen Batterien besteht.

Nach Figur 5 ist das Batteriemodul 15 in einem Batteriefach 18 des Gehäuses 2 angeordnet, wobei das Batteriefach 18 eine Öffnung 19 zur Aufnahme des Batteriemoduls 15 aufweist. Die Öffnung 19 des Batteriefachs 18 ist zum Gurtband 1 hin ausgerichtet, um eine Entnahme des Batteriemoduls 15 im montierten Zustand des Gehäuses 2 zu verhindern. Das Batteriefach 18 ist mittels einer Abdeckung 20 verschließbar, wobei an der Abdeckung 20 ein erstes Fixierelement 21 angeordnet ist. Vorliegend sind das Verlagerungselement 7, zwei Sensorelemente 8a, 8b, das im Batteriefach 18 aufgenommene Batteriemodul 15, sowie eine Auswerte- und Sendeeinheit 17 und eine Anzeigeeinheit 16 in dem Oberteil 2b angeordnet, wobei die Auswerte- und Sendeeinheit 17 und die Anzeigeeinheit 16 von dem Batteriemodul mit elektrischer Energie versorgt werden.

Alternativ ist denkbar, das Verlagerungselement 7, die beiden Sensorelemente 8a, 8b, das im Batteriefach 18 aufgenommene Batteriemodul 15, sowie die Auswerte- und Sendeeinheit 17 und eine Anzeigeeinheit 16 in dem Unterteil 2a anzuordnen, wobei in diesem Fall die Auflagebereiche 6a, 6b einteilig an dem Oberteil 2b ausgebildet sind.

Das erste Fixierelement 21 an der Abdeckung 20 liegt dem ersten Auflagenbereich 6a an dem Unterteil 2a gegenüber, wobei an dem ersten Auflagenbereich 6a ein zweites Fixierelement 40 angeformt ist. Bei der Montage des Gehäuses 2 wird das Gurtband 1 zwischen dem zweiten Fixierelement 40 des ersten Auflagenbereichs 6a und dem Fixierelement 21 an der Abdeckung 20 eingeklemmt, wodurch das Gehäuse 2 am Gurtband 1 geklemmt bzw. ortsfest fixiert wird. Dies ist von großem Vorteil, da die Vorrichtung auch im Falle von Stößen und Erschütterungen nicht in Gurtlängsrichtung verrutschen und gegen Fahrzeugteile oder harte Teile der Ladung schlagen kann.

Das erste Fixierelement 21 weist vorliegend eine rutschhemmende Oberflächenstruktur 31 auf, um ein ungewolltes Verrutschen des Gehäuses 2 zu verhindern. Alternativ kann auch das zweite Fixierelement 40 eine rutschhemmende Oberflächenstruktur aufweisen. Ferner alternativ weisen beide Fixierelemente 21, 40 eine rutschhemmende Oberflächenstruktur auf.

Durch das Aufdrücken des Oberteils 2b auf das Unterteil 2a während der Montage wirkt ferner eine Kraft auf die Abdeckung 20 ein, die sowohl abdichtend als auch fixierend auf das im Batteriefach 18 befindliche Batteriemodul 15 wirkt. Mithin integriert die Abdeckung 20 mit dem ersten Fixierelement 21 mehrere Aufgaben in einem Bauteil.

Gemäß einem zweiten Ausführungsbeispiel ist das Gelenk 3 gemäß Figur 7 an der Gurteintrittsseite 5a des Gehäuses 2 und der Schließmechanismus 4 an der Gurtaustrittsseite 5b des Gehäuses 2 angeordnet sind. Das Gelenk 3 ist derart ausgebildet, dass das Oberteil 2b in einen Hinterschnitt des Unterteils 2a hineingreift um eine formschlüssige Verbindung zwischen dem Unter- und Oberteil 2a, 2b zu erzeugen. Gegenüber der ersten Ausführungsform wird in diesem Fall das Oberteil 2b erst nach Einlegen des Gurtbandes 1 auf das Unterteil 2a am Gelenk 3 eingehakt.

Das Gelenk 3 weist an der ersten und zweiten Gehäuseseite 22a, 22b einen jeweiligen Gurtanschlag 38 auf, wobei das Gurtband 1 beim Einlegen in das Gehäuse 2 quer zur Längsrichtung des Gurtbandes 1 korrekt auf dem Unterteil 2a positioniert wird. Mit anderen Worten wird das Gurtband 1 bei der Montage mittels der beiden Gurtanschläge 38 in Längsrichtung geführt.

Zur Ausbildung des Schließmechanismus 4 sind im Bereich der Gurtaustrittsseite 5b Rastelemente 32a, 32b am Unterteil 2a ausgebildet, die in korrespondierende Ausnehmungen 33 am Oberteil 2b eingreifen und zum Verschließen des Gehäuses verrasten. Dadurch wird eine kraft- und formschlüssige Verbindung zwischen dem Unter- und Oberteil 2a, 2b erzeugt.

Gemäß Figur 8 sind das Unter- und Oberteil 2a, 2b des Gehäuses 2 nach einem dritten Ausführungsbeispiel durch das Gelenk 3 einteilig miteinander verbunden. Mit anderen Worten ist das Gelenk 3 Bindeglied zwischen dem Unter- und Oberteil 2a, 2b. Das Gelenk 3 ist dabei derart ausgebildet, dass eine elastische Verformung des Gelenks 3 möglich ist, um ein Verschließen des Gehäuses 2 zu realisieren. Dadurch kann beispielsweise auf den ersten Bolzen 11 gemäß Figur 3 verzichtet werden. Die Schließmechanismus 4 sowie die übrige Funktionsweise der Vorrichtung sind analog zu den Ausführungen aus Figur 3 ausgebildet.

Nach Figur 9 sind gemäß einem vierten Ausführungsbeispiel zur Ausbildung des Gelenks 3 und des Schließmechanismus 4 an der Abdeckung 20 des Batteriefachs 18 Ösen 34 zur Aufnahme des ersten Bolzens 11 und Ösen 35 zur Aufnahme des in Figur 3 gezeigten zweiten Bolzens 14 angeordnet. Somit ist die Abdeckung 20 als separates Bauteil räumlich zwischen dem Ober- und Unterteil angeordnet und ebenso wie das Ober- und Unterteil 2a, 2b um das Gelenk 3 und den Bolzen 11 verschwenkbar.

Die Ösen 34, 35 sind zur einfacheren Montage des Gehäuses 2 in Form eines geöffneten Rings ausgebildet. Im montierten Zustand des Gehäuses 2 fluchten die Ösen 9, 10, 34 des Gelenks 3 und die Ösen 12, 13, 35 des Schließmechanismus 4 miteinander, sodass der jeweilige Bolzen 11, 14 durch die jeweiligen Ösen 9, 10, 34, 12, 13, 35 hindurchgeführt werden kann. Das Gelenk 3 dient insbesondere als Exzenter für das Verklemmen des Gurtbandes 1 im Gehäuse 2.

Die Funktionsweisen der unterschiedlichen Ausführungsformen gemäß den Figuren 1 bis 9 sind beliebig miteinander kombinierbar und nicht auf die hier erläuterten Ausführungsformen beschränkt. So ist denkbar, Rastelemente zum Verschließen des Gehäuses 2 für die Ausführung gemäß den Figuren 1 bis 5 vorzusehen. Ebenso ist möglich, an der Gurteintrittsseite 5a bzw. der Gurtaustrittsseite 5b des Gehäuses 2 Ösen vorzusehen, um die Unter- und Oberseite 2a, 2b mittels Bolzen miteinander zu verbinden und das Gehäuse 2 am Gurtband 1 zu fixieren.

### Bezugszeichenliste

1 Gurtband
2 Gehäuse
2a Unterteil
2b Oberteil
3 Gelenk
4 Schließmechanismus
5a Gurteintrittsseite
5b Gurtaustrittsseite
6a, 6b Auflagebereich
7 Verlagerungselement
8a, 8b Sensorelement
9 Öse
10 Öse
1 1 Bolzen
12 Öse
13 Öse
14 Bolzen
15 Batteriemodul
16 Anzeigeeinheit
17 Auswerte- und Sendeeinheit
18 Batteriefach
19 Öffnung
20 Abdeckung
21 Fixierelement
22a, 22b Gehäuseseite
23 Kraftfahrzeug
24 Ladegut
25 Ladefläche
26 Mutter
27 Ausnehmung
28 Spannrichtung
29 Auslenkungsrichtung
30 Dehnungsmessstreifen
31 Oberflächenstruktur
32a, 32b Rastelement 33 Ausnehmung
34 Öse
35 Öse
36 LED-Leuchtmittel 37 Zahlenwert
38 Gurtanschlag
39a, 39b Bereich
40 Fixierelement

## Patentansprüche

1. Vorrichtung zur Sensierung der Gurtspannkraft eines Gurtbandes (1), insbesondere eines Spanngurtes zur Ladungssicherung auf Fahrzeugen, umfassend ein Gehäuse (2) mit sich gegenüberliegendem Unterteil (2a) und Oberteil (2b), wobei das Gehäuse (2) ferner eine Gurteintrittsseite (5a) und eine Gurtaustrittsseite (5b) zur Hindurchführung des Gurtbandes (1) durch das Gehäuse (2) aufweist, wobei an dem Ober- oder dem Unterteil (2b, 2a) zwei Auflagebereiche (6a, 6b) für das Gurtband (1) ausgebildet sind, wobei an dem den beiden Auflagebereichen (6a, 6b) gegenüberliegenden Unter- oder Oberteil (2a, 2b) zumindest ein quer zur Längsrichtung des Gurtbandes (1) bewegliches Verlagerungselement (7) angeordnet ist, das mit zumindest einem Sensorelement (8a) wirkverbunden ist, um infolge einer durch die Gurtspannkraft des Gurtbands (1) initiierten Auslenkung des Verlagerungselements (7) die Gurtspannkraft des Gurtbandes (1) zu detektieren, und wobei ein Batteriemodul (15) vorgesehen ist, um eine Auswerte- und Sendeeinheit (17) mit elektrischer Energie zu versorgen, wobei das Batteriemodul (15) dazu vorgesehen ist, eine Anzeigeeinheit (16) mit elektrischer Energie zu versorgen, **dadurch gekennzeichnet, dass** die Anzeigeeinheit (16) zumindest ein LED-Leuchtmittel (36) umfasst, und dass eine Vielzahl von LED-Leuchtmitteln (37) vorgesehen sind, die in lastabhängige und/oder ladungsabhängige Bereiche (39a, 39b) unterteilt sind.

2. Vorrichtung nach Anspruch 1, **dadurch gekennzeichnet, dass** die beiden Auflagebereiche (6a, 6b) einstückig an dem Ober- oder Unterteil (2b, 2a) ausgebildet sind.

3. Vorrichtung nach einem der Ansprüche 1 oder 2, **dadurch gekennzeichnet, dass** das zumindest eine Sensorelement (8a) ein Kraftsensor, ein Wegsensor, ein Drucksensor, ein Beschleunigungssensor und/oder ein Dehnungssensor ist.

4. Vorrichtung nach einem der vorangehenden Ansprüche, **dadurch gekennzeichnet, dass** das zumindest eine Sensorelement (8a) aus einem Metall, einem Kohlenstoff-Silikon-Verbundwerkstoff und/oder einem piezosensitiven Material ausgebildet ist.

5. Vorrichtung nach einem der vorangehenden Ansprüche, **dadurch gekennzeichnet, dass** zwei Sensorelemente (8a, 8b) mit dem Verlagerungselement (7) wirkverbunden sind, um die Gurtspannkraft des Gurtbandes (1) zu detektieren.

6. Vorrichtung nach einem der vorangehenden Ansprüche, **dadurch gekennzeichnet, dass** das Gehäuse (2) ein Gelenk (3) zur Verschwenkung des Oberteils (2b) gegenüber dem Unterteil (2a) und einen Schließmechanismus (4) zum Verschließen des Gehäuses (2) aufweist.

7. Vorrichtung nach Anspruch 6, **dadurch gekennzeichnet, dass** zur Ausbildung des Gelenks (3) am Ober- und Unterteil (2a, 2b) Ösen (9, 10) zur gemeinsamen Aufnahme eines ersten Bolzens (11) angeordnet sind.

8. Vorrichtung nach einem der Ansprüche 6 oder 7, **dadurch gekennzeichnet, dass** zur Ausbildung des Schließmechanismus (4) am Ober- und Unterteil (2a, 2b) weitere Ösen (12, 13) zur gemeinsamen Aufnahme eines zweiten Bolzens (14) angeordnet sind.

9. Vorrichtung nach einem der vorangehenden Ansprüche, **dadurch gekennzeichnet**, das Batteriemodul in einem Batteriefach des Gehäuses angeordnet, wobei das Batteriefach eine Öffnung zur Aufnahme des Batteriemoduls aufweist, wobei die Öffnung des Batteriefachs zum Gurtband hin ausgerichtet ist.

10. Vorrichtung nach einem der vorangehenden Ansprüche , **dadurch gekennzeichnet, dass** das Batteriemodul (15), die Anzeigeeinheit (16) sowie die Auswerte- und Sendeeinheit (17) gemeinsam in dem Ober- oder Unterteil (2a, 2b) angeordnet sind.

11. Vorrichtung nach einem der vorangehenden Ansprüche, **dadurch gekennzeichnet, dass** das Batteriefach (18) mittels einer Abdeckung (20) verschließbar ist.

12. Vorrichtung nach einem der vorangehenden Ansprüche, **dadurch gekennzeichnet, dass** am Ober- oder Unterteil (2a, 2b) ein erstes Fixierelement (21) angeordnet ist, um das Gehäuse (2) in Längsrichtung am Gurtband (1) zu befestigen.

13. Vorrichtung nach Anspruch 12, **dadurch gekennzeichnet, dass** das erste Fixierelement (21) an einem der Auflagebereiche (6a, 6b) angeordnet ist, wobei das erste Fixierelement (21) gemeinsam mit einem zweiten, an dem gegenüberliegenden Unter- oder Oberteil (2a, 2b) angeordneten Fixierelement (40) das Gurtband (1) in Längsrichtung klemmt.

14. Vorrichtung nach einem Anspruch 11 in Kombination mit einem der Ansprüche 12 oder 13, **dadurch gekennzeichnet, dass** das erste Fixierelement (21) an der Abdeckung (20) des Batteriefachs (18) angeformt ist.

15. Vorrichtung nach einem der Ansprüche 6 bis 8, **dadurch gekennzeichnet, dass** das Gelenk (3) und der Schließmechanismus (4) an gegenüberliegenden Gehäuseseiten (22a, 22b) des Gehäuses (2) angeordnet sind.

16. Vorrichtung nach Anspruch 15, **dadurch gekennzeichnet, dass** das Gelenk (3) an der Gurteintrittsseite (5a) des Gehäuses (2) und der Schließmechanismus (4) an der Gurtaustrittsseite (5b) des Gehäuses (2) angeordnet sind.

17. Vorrichtung nach einem der Ansprüche 6 bis 8, 15 oder 16, **dadurch gekennzeichnet, dass** das Unter- und Oberteil (2a, 2b) des Gehäuses (2) durch das Gelenk (3) einteilig miteinander verbunden sind.

## Claims

1. Device for sensing the belt tensioning force of a belt strap (1), in particular a tensioning belt for securing loads on vehicles, comprising a housing (2) having an opposing lower part (2a) and upper part (2b), the housing (2) further comprising a belt entry side (5a) and a belt exit side (5b) for guiding the belt strap (1) through the housing (2), two support regions (6a, 6b) for the belt strap (1) being formed on the upper or lower part (2b, 2a), at least one displacement element (7) which is movable transversely to the longitudinal direction of the belt strap (1) being arranged on the lower or upper part (2a, 2b) opposite the two support regions (6a, 6b), which displacement element is operatively connected to at least one sensor element (8a) in order to detect the belt tensioning force of the belt strap (1) as a result of a deflection of the displacement element (7) initiated by the belt tensioning force of the belt strap (1), and a battery module (15) being provided for supplying an evaluation and transmitting unit (17) with electrical energy, the battery module (15) being provided for supplying a display unit (16) with electrical energy, **characterized in that**
the display unit (16) comprises at least one LED lamp (36), and **in that** a plurality of LED lamps (37) are provided, which are divided into load-dependent and/or charge-dependent regions (39a, 39b).

2. Device according to claim 1, **characterized in that** the two support regions (6a, 6b) are integrally formed on the upper or lower part (2b, 2a).

3. Device according to claim 1 or claim 2, **characterized in that** the at least one sensor element (8a) is a force sensor, a displacement sensor, a pressure sensor, an acceleration sensor and/or a strain sensor.

4. Device according to any of the preceding claims, **characterized in that** the at least one sensor element (8a) is formed from a metal, a carbon-silicone composite material and/or a piezosensitive material.

5. Device according to any of the preceding claims, **characterized in that** two sensor elements (8a, 8b) are operatively connected to the displacement element (7) in order to detect the belt tensioning force of the belt strap (1).

6. Device according to any of the preceding claims, **characterized in that** the housing (2) has a joint (3) for pivoting the upper part (2b) relative to the lower part (2a) and a closing mechanism (4) for closing the housing (2).

7. Device according to claim 6, **characterized in that** for forming the joint (3) on the upper and the lower part (2a, 2b), eyelets (9, 10) are arranged for the joint reception of a first bolt (11).

8. Device according to claim 6 or claim 7, **characterized in that** for forming the closing mechanism (4) on the upper and the lower part (2a, 2b), further eyelets (12, 13) are arranged for the joint reception of a second bolt (14).

9. Device according to any of the preceding claims, **characterized in that** the battery module is arranged in a battery compartment of the housing, the battery compartment having an opening for receiving the battery module, the opening of the battery compartment being oriented toward the belt strap.

10. Device according to any of the preceding claims, **characterized in that** the battery module (15), the display unit (16) and the evaluation and transmitting unit (17) are arranged together in the upper or lower part (2a, 2b).

11. Device according to any of the preceding claims, **characterized in that** the battery compartment (18) is closable by a cover (20).

12. Device according to any of the preceding claims, **characterized in that** a first fixing element (21) is arranged on the upper or lower part (2a, 2b) in order to fasten the housing (2) in the longitudinal direction on the belt strap (1).

13. Device according to claim 12, **characterized in that** the first fixing element (21) is arranged on one of the support regions (6a, 6b), the first fixing element (21) clamping the belt strap (1) in the longitudinal direction together with a second fixing element (40) arranged on the opposite lower or upper part (2a, 2b).

14. Device according to claim 11 in combination with claim 12 or claim 13,
**characterized in that** the first fixing element (21) is integrally formed on the cover (20) of the battery compartment (18).

15. Device according to any of claims 6 to 8, **characterized in that** the joint (3) and the closing mechanism (4) are arranged on opposite housing sides (22a, 22b) of the housing (2).

16. Device according to claim 15, **characterized in that** the joint (3) is arranged on the belt entry side (5a) of the housing (2) and the closing mechanism (4) is arranged on the belt exit side (5b) of the housing (2).

17. Device according to any of claims 6 to 8, 15 or 16, **characterized in that** the lower and the upper part (2a, 2b) of the housing (2) are integrally connected to one another by the joint (3).

## Revendications

1. Dispositif de détection de la force de tension de sangle d'une sangle (1), en particulier d'une sangle de serrage pour l'arrimage de chargement sur des véhicules, comprenant un boîtier (2) avec une partie inférieure (2a) et une partie supérieure (2b) opposées, dans lequel le boîtier (2) présente en outre un côté d'entrée de sangle (5a) et un côté de sortie de sangle (5b) pour le passage de la sangle (1) à travers le boîtier (2), dans lequel deux zones d'appui (6a, 6b) pour la sangle (1) sont réalisées sur la partie supérieure ou inférieure (2b, 2a), dans lequel au moins un élément de déplacement (7) mobile transversalement à la direction longitudinale de la sangle (1) est disposé sur la partie inférieure ou supérieure (2a, 2b) opposée aux deux zones d'appui (6a, 6b), qui est en liaison fonctionnelle avec au moins un élément capteur (8a), afin de détecter la force de tension de la sangle (1) suite à une déviation de l'élément de déplacement (7) initiée par la force de tension de sangle de la sangle (1), et dans lequel un module de batterie (15) est prévu pour alimenter en énergie électrique une unité d'évaluation et d'émission (17), dans lequel le module de batterie (15) est prévu pour alimenter une unité d'affichage (16) en énergie électrique, **caractérisé en ce que** l'unité d'affichage (16) comprend au moins un moyen d'éclairage à DEL (36), et **en ce qu'**une pluralité de moyens d'éclairage à DEL (37), qui sont divisés en zones (39a, 39b) dépendant de la charge et/ou du chargement, est prévue.

2. Dispositif selon la revendication 1, **caractérisé en ce que** les deux zones d'appui (6a, 6b) sont réalisées d'un seul tenant sur la partie supérieure ou inférieure (2b, 2a).

3. Dispositif selon l'une quelconque des revendications 1 ou 2, **caractérisé en ce que** l'au moins un élément capteur (8a) est un capteur de force, un capteur de déplacement, un capteur de pression, un capteur d'accélération et/ou un capteur d'allongement.

4. Dispositif selon l'une quelconque des revendications précédentes, **caractérisé en ce que** l'au moins un élément capteur (8a) est réalisé à partir d'un métal, d'un matériau composite carbone-silicone et/ou d'un matériau piézo-sensible.

5. Dispositif selon l'une quelconque des revendications précédentes, **caractérisé en ce que** deux éléments capteurs (8a, 8b) sont en liaison fonctionnelle avec l'élément de déplacement (7) pour détecter la force de tension de sangle de la sangle (1).

6. Dispositif selon l'une quelconque des revendications précédentes, **caractérisé en ce que** le boîtier (2) présente une articulation (3) pour faire pivoter la partie supérieure (2b) par rapport à la partie inférieure (2a) et un mécanisme de fermeture (4) pour fermer le boîtier (2).

7. Dispositif selon la revendication 6, **caractérisé en ce que** pour réaliser l'articulation (3), des oeillets (9, 10) sont disposés sur la partie supérieure et inférieure (2a, 2b) pour recevoir conjointement un premier boulon (11).

8. Dispositif selon l'une quelconque des revendications 6 ou 7, **caractérisé en ce que**, pour réaliser le mécanisme de fermeture (4), d'autres oeillets (12, 13) sont disposés sur la partie supérieure et inférieure (2a, 2b) pour recevoir conjointement un deuxième boulon (14).

9. Dispositif selon l'une quelconque des revendications précédentes, **caractérisé en ce que** le module de batterie est disposé dans un compartiment de batterie du boîtier, dans lequel le compartiment de batterie présente une ouverture pour recevoir le module de batterie, dans lequel l'ouverture du compartiment de batterie est orientée vers la sangle.

10. Dispositif selon l'une quelconque des revendications précédentes, **caractérisé en ce que** le module de batterie (15), l'unité d'affichage (16) ainsi que l'unité d'évaluation et d'émission (17) sont disposés conjointement dans la partie supérieure ou inférieure (2a, 2b).

11. Dispositif selon l'une quelconque des revendications précédentes, **caractérisé en ce que** le compartiment de batterie (18) peut être fermé au moyen d'un couvercle (20).

12. Dispositif selon l'une quelconque des revendications précédentes, **caractérisé en ce qu'**un premier élément de fixation (21) est disposé sur la partie supérieure ou inférieure (2a, 2b), afin de fixer le boîtier (2) dans la direction longitudinale sur la sangle (1).

13. Dispositif selon la revendication 12, **caractérisé en ce que** le premier élément de fixation (21) est disposé sur une des zones d'appui (6a, 6b), dans lequel le premier élément de fixation (21) serre la sangle (1) dans la direction longitudinale conjointement avec un deuxième élément de fixation (40) disposé sur la partie inférieure ou supérieure (2a, 2b) opposée.

14. Dispositif selon l'une quelconque des revendications 11 en combinaison avec l'une des revendications 12 ou 13, **caractérisé en ce que** le premier élément de fixation (21) est formé sur le couvercle (20) du compartiment de batterie (18).

15. Dispositif selon l'une quelconque des revendications 6 à 8, **caractérisé en ce que** l'articulation (3) et le mécanisme de fermeture (4) sont disposés sur des côtés de boîtier (22a, 22b) opposés du boîtier (2).

16. Dispositif selon la revendication 15, **caractérisé en ce que** l'articulation (3) est disposée sur le côté d'entrée de sangle (5a) du boîtier (2) et le mécanisme de fermeture (4) sur le côté de sortie de sangle (5b) du boîtier (2).

17. Dispositif selon l'une quelconque des revendications 6 à 8, 15 ou 16, **caractérisé en ce que** les parties inférieure et supérieure (2a, 2b) du boîtier (2) sont reliées entre elles d'une seule pièce par l'articulation (3).
